# EUROPÄISCHE PATENTSCHRIFT

(11) **EP 3 519 288 B1**
(45) Veröffentlichungstag und Bekanntmachung des Hinweises auf die Patenterteilung: **25.03.2020**
(21) Anmeldenummer: 18745854.2
(22) Anmeldetag: 16.07.2018
(51) Int. Cl.: B62M 25/06, B62M 25/08

(54) **SCHALTSIGNALGEBER FÜR EIN SCHALTGETRIEBE EINES FAHRZEUGS UND SCHALTVORRICHTUNG FÜR EIN SCHALTGETRIEBE**
SHIFT SIGNAL TRANSMITTER FOR A MANUAL TRANSMISSION OF A VEHICLE, AND SHIFT APPARATUS FOR A MANUAL TRANSMISSION
ÉMETTEUR DE SIGNAUX DE CHANGEMENT DE VITESSE POUR BOÎTE DE VITESSES D'UN VÉHICULE ET DISPOSITIF DE CHANGEMENT DE VITESSE POUR BOÎTE DE VITESSES

(30) Priorität: 28.07.2017 DE 102017213041
(43) Veröffentlichungstag der Anmeldung: 07.08.2019
(73) Patentinhaber: Bing Power Systems GmbH, 90427 Nürnberg (DE)
(72) Erfinder: BRUCH, Romina, 90763 Fürth (DE); ZANGL, Martin, 91315 Höchstadt (DE)
(74) Vertreter: FDST Patentanwälte
(86) Internationale Anmeldenummer: PCT/EP2018/069306
(87) Internationale Veröffentlichungsnummer: WO 2019/020425

(56) Entgegenhaltungen:
- WO-A2-00/03912
- DE-A1-102010 015 037
- DE-A1-102012 111 908

## Beschreibung

Bei Fahrzeugen mit einem Schaltgetriebe, insbesondere Motorrädern kommen - insbesondere um während des Fahrens den Einsatz der Kupplung auf einfache Weise unterlassen zu können - elektrische Signalgeber zum Einsatz, die dem Fahrzeugsteuergerät, insbesondere dem Motorsteuergerät, einen Wunsch zum Gangwechsel durch den Fahrzeugnutzer anzeigen. Das Fahrzeugsteuergerät ist dabei dazu eingerichtet, auf das entsprechende (Schalt-)Signal hin die Motordrehzahl an die Getriebedrehzahl anzugleichen, sodass der nächsthöhere oder nächstniedrigere Gang auch im eingekoppelten Zustand (d. h. bei geschlossener Kupplung) des Schaltgetriebes mit vergleichsweise niedrigem Kraftaufwand eingelegt werden kann. Dies hat den Vorteil, dass insbesondere bei Motorrädern der Kraftaufwand zum Betätigen (insbesondere Öffnen) der Kupplung sowie zum Einlegen des jeweiligen Gangs verringert werden kann. Somit kann der Fahrkomfort gesteigert werden.

Häufig wird hierbei der zur Erzeugung des Schaltsignals dienende Geber in den Kraftübertragungsweg des Schaltgestänges - bei einem Motorrad also insbesondere zwischen den Fußschalthebel und den getriebeseitigen Schalthebel - eingefügt. Beispielsweise wird dabei das Schaltgestänge in Kraftübertragungsrichtung aufgetrennt, wodurch ein im Vergleich zum gesamten Schaltweg kleiner Leerhub gebildet wird, der beim Betätigen des Schaltgestänges zur Auslösung wenigstens eines Schaltelements, beispielsweise eines Tasters oder dergleichen, zur Generierung des Schaltsignals genutzt werden kann. Dies ist beispielsweise aus DE 10 2010 015 037 A1, DE 10 2012 111 908 A1 und WO 00/03912 A3 bekannt. Erkanntermaßen unterliegen insbesondere mechanische Schalter aufgrund des Kontakts mit dem auslösenden Element Verschleiß und Umwelteinflüssen wie beispielsweise der Temperatur. Des Weiteren wird für jede Schaltrichtung meist ein separater Schalter benötigt. Dokument DE 10 2010 015037 A1 offenbart den Oberbegriff des Anspruchs 1.

Der Erfindung liegt die Aufgabe zugrunde, eine Schaltvorrichtung für ein Schaltgetriebe eines Fahrzeugs zu verbessern.

Diese Aufgabe wird erfindungsgemäß gelöst durch einen Schaltsignalgeber mit den Merkmalen des Anspruchs 1. Des Weiteren wird die Aufgabe erfindungsgemäß gelöst durch eine Schaltvorrichtung mit einem Schaltsignalgeber gemäß Anspruch 10. Weitere vorteilhafte und teils für sich erfinderische Ausführungsformen und Weiterbildungen der Erfindung sind in den Unteransprüchen und der nachfolgenden Beschreibung dargelegt.

Der erfindungsgemäße Schaltsignalgeber dient zum Einsatz mit einem Schaltgetriebe eines Fahrzeugs, insbesondere eines Motorrads. Der Schaltsignalgeber umfasst eine Schaltstange zur kraftübertragungstechnischen Kopplung - optional unter Zwischenschaltung einer Verlängerungsstange - mit einem Fußhebel. Außerdem umfasst der Schaltsignalgeber ein insbesondere hülsenartiges Gehäuse, in dem die Schaltstange entlang ihrer Längsachse zwischen zwei Axialanschlägen axial verschiebbar geführt ist. Des Weiteren umfasst der Schaltsignalgeber ein zur Kopplung mit einem Schalthebel dienendes Verbindungsstück, das gegenüberliegend zu einem innenliegenden - d. h. im Inneren des Gehäuses angeordneten - Axialende der Schaltstange starr mit dem Gehäuse verbunden ist. Des Weiteren umfasst der Schaltsignalgeber einen Abstandssensor zur berührungslosen Abstandsmessung, wobei der Abstandssensor innerhalb des Gehäuses in Gegenüberstellung zu dem innenliegenden Axialende der Schaltstange angeordnet und mit einer Sensorfläche radial zur Längsachse ausgerichtet ist. Außerdem weist der Abstandssensor eine Leiterplatte auf, die innerhalb des Gehäuses dem innenliegenden Axialende der Schaltstange gegenüberliegend und mit ihrer Flächenerstreckung radial zur Längsachse der Schaltstange ausgerichtet ist. Die Leiterplatte spannt somit die Sensorfläche auf. Die Leiterplatte trägt hierzu eine elektrisch leitfähige Leiterbahn, mittels derer vorzugsweise im bestimmungsgemäßen Betrieb ein induktives Messfeld erzeugt wird, dessen Feldlinien vorzugsweise zumindest in einem vorgegebenen Messbereich des Abstandssensors abschnittsweise parallel zur Längsachse der Schaltstange verlaufen. Außerdem trägt die Leiterplatte eine Auswerteschaltung zur Erzeugung eines Schaltsignals.

Vorzugsweise dient die Auswerteeinheit zur Messung des Abstands zu dem innenliegenden Axialende der Schaltstange. Vorzugsweise ist die Auswerteschaltung dabei eingerichtet, das Schaltsignal auf Grundlage der Abstandsmessung, d. h. in Abhängigkeit von dem detektierten Abstand des innenliegenden Axialendes zu der Spule zu erzeugen. Der Abstandssensor ist mithin als integrales Bauteil zur Messung und Auswertung des Abstands zu dem innenliegenden Axialende sowie vorzugsweise zur Ausgabe des Schaltsignals ausgebildet.

Vorzugsweise wird das von dem Schaltsignalgeber, konkret von der Auswerteschaltung erzeugte Schaltsignal im bestimmungsgemäßen Betrieb an eine übergeordnete Steuerung, bspw. das Motorsteuergerät des Fahrzeugs, insbesondere des Motorrads übermittelt. Von dieser bzw. diesem wird das Schaltsignal (insbesondere direkt oder indirekt) genutzt, um eine (Motor-)Drehzahl und eine Getriebedrehzahl aneinander anzugleichen. Je geringer die Drehzahldifferenz, desto geringer ist eine zum Gangwechsel erforderliche Schaltkraft insbesondere bei geschlossener Kupplung. Die induktive Messung ist dabei vorteilhafterweise vergleichsweise unanfällig für ansonsten meist störende Einflüsse wie z. B. Verunreinigungen, Flüssigkeiten und dergleichen. Ebenso werden vorteilhafterweise aufgrund der berührungslosen Messung mechanische Einflüsse, z. B. Abrieb und dergleichen vermieden.

In einer bevorzugten Ausführung trägt die Leiterplatte dabei als elektrisch leitfähige Leiterbahn eine insbesondere spiralförmig ausgebildete Spule, die vorzugsweise auf die Leiterplatte aufgedruckt ist, und die zur Erzeugung des induktiven Messfelds und somit zur induktiven Abstandsmessung gegen das innenliegende Axialende der Schaltstange dient.

Des Weiteren ist die Auswerteschaltung in einer bevorzugten Ausführung dazu eingerichtet, ein erstes Schaltsignal auszugeben, wenn sich das innenliegende Axialende der Schaltstange näher als einen ersten Schaltwert an die Spule annähert und ein zweites Schaltsignal auszugeben, wenn sich das Axialende weiter als einen zweiten Schaltwert von der Spule entfernt. Mit anderen Worten ist die Auswerteschaltung des Abstandssensors dazu eingerichtet, bei Annäherung des innen liegenden Axialendes unterhalb eines vorgegebenen ersten Abstandwerts (dem der entsprechende erste Schaltwert zugeordnet ist) das erste Schaltsignal auszugeben und das zweite Schaltsignal auszugeben, wenn sich das innen liegenden Axialende um mehr als einen vorgegeben zweiten Abstandwert (dem der entsprechende zweite Schaltwert zugeordnet ist) von der Spule entfernt. Dadurch kann auf einfache Weise mit nur einem Sensor jeweils ein einem Gangwechsel in einen höheren oder einen niedrigeren Gang zugeordnetes Schaltsignal erzeugt werden. Optional wird zur Generierung des jeweiligen Schaltsignals eine Messwertkurve, üblicherweise eine Spannungswertekurve über der Zeit betrachtet und mit den entsprechenden Schalt- oder Grenzwerten verglichen. Die erfasste (Ausgangs-)Spannung der Leiterbahn, insbesondere der Spule stellt dabei eine charakteristische Messgröße für den Abstand des Axialendes der Schaltstange zu der Spule dar. In diesem Fall dient die Auswerteschaltung mithin insbesondere dazu, die Abstandsmessung auch auf die Erfüllung von Auswertekriterien zu überprüfen, also die Überschreitung der jeweiligen vorgegebenen Schaltwerte zu erkennen und das jeweilige erste oder zweite Schaltsignal nur im zutreffenden Fall auszugeben. Bei dieser Variante kann die übergeordnete Steuerung das jeweilige Schaltsignal direkt zur Ansteuerung des Motors und/oder des Schaltgetriebes nutzen.

In einer alternativen Ausführungsvariante ist die Auswerteschaltung insbesondere zur Verstärkung der Ausgangsspannung der Leiterbahn, insbesondere der Spule und zur Weitergabe der aus dieser Ausgangsspannung resultierenden Messspannung als das Schaltsignal an die übergeordnete Steuerung, bspw. das Motorsteuergerät des Fahrzeugs, insbesondere des Motorrads eingerichtet. In diesem Fall wertet also vorzugsweise das Motorsteuergerät das empfangene Schaltsignal, mithin die Messspannung (oder eine aus dem zeitlichen Verlauf der Werte der Messspannung resultierende Messwertkurve) vorzugsweise selbst aus und triggert die Anpassung der (Motor-)Drehzahl entsprechend.

Vorzugsweise sind der erste und der zweite Schaltwert derart gewählt, dass sie um einen schaltsignalfreien Abstandswert auseinanderliegen. Dadurch wird ermöglicht, dass bei geringfügigen Verschiebungen der Schaltstange ausgehend von einer Neutralstellungeine unbeabsichtigte Erzeugung, mithin eine fehlerhafte Ausgabe des jeweiligen Schaltsignals unterbunden wird. Diese Neutralstellung liegt dabei zweckmäßigerweise zwischen zwei entsprechenden, den beiden Schaltwerten zugeordneten Schaltpositionen, d. h. insbesondere zwischen den den beiden Schaltwerten zugeordneten Abständen zum Abstandssensor.

In einer zweckmäßigen Ausführung sind die Leiterplatte und somit auch die Leiterbahn, insbesondere die Spule unbewegliche im Innenraum des Gehäuses an diesem befestigt. Mithin ist die Leiterplatte ortsfest relativ zu der Schaltstange angeordnet.

Die Schaltstange ist dabei weiter bevorzugt aus der neutralen Stellung (d. h. der Neutralstellung) um einen ersten Schalthub in Richtung auf den Abstandssensor und um einen zweiten Schalthub in Richtung von dem Abstandssensor weg verschiebbar. Vorzugsweise ist die Schaltstange dabei mittels eine Feder - im unbelasteten Zustand, d. h. ohne externe Krafteinwirkung durch einen Fahrer des Fahrzeugs - in der Neutralstellung verspannt.

Die zwei Axialanschläge dienen insbesondere bei einer Bewegung der Schaltstange, die insbesondere über den jeweiligen Schalthub hinaus erfolgt, als Mitnehmer zur Übertragung einer auf die Schaltstange aufgebrachten Schaltkraft in die jeweilige Axialrichtung. Eine solche, über den jeweiligen Schalthub hinausgehende Bewegung der Schaltstange ist dabei erforderlich, um den erforderlichen Schaltweg auf das Schaltgetriebe zu übertragen.

Vorzugsweise stellt der jeweilige Schalthub dabei nur einen Bruchteil des gesamten Schaltwegs, bspw. 5 bis 50 Prozent, dar. Insbesondere hängt dieser Bruchteil aber von dem jeweiligen Schaltgetriebe ab. Dadurch wird vorteilhafterweise ermöglicht, dass bei Betätigung des Fußhebels zunächst der jeweilige Schalthub überwunden wird oder alternativ aufgrund der ausgegebenen Messspannung als Schaltsignal die übergeordnete Steuerung des Fahrzeugs ein internes Schaltsignal erzeugt und daraufhin die übergeordnete Steuerung die Angleichung der Motordrehzahl und der Getriebedrehzahl triggert. Anschließend, d. h. bei weiterer Bewegung des Fußhebels wird der Schaltweg zum Gangwechsel überwunden, wobei aufgrund der Angleichung der Drehzahlen die erforderliche Schaltkraft abfällt, so dass das Schalten ohne Betätigung der Kupplung vereinfacht wird.

Vorzugsweise sind die Schaltstange und/oder eine bspw. zu deren Lagerung auf deren innenliegendes Axialende aufgesetzte Hülse aus einem unmagnetischen Material gebildet. Die Verwendung der Spule und somit die Abstandsmessung nach dem induktiven Messprinzip ermöglicht nämlich auch ein Sensieren (Detektieren) von unmagnetischen Objekten, sodass vorteilhafterweise der Einsatz eines üblicherweise vergleichsweise teuren magnetischen Materials entfallen kann.

Alternativ sind die Schaltstange und/oder die Hülse aus magnetischem Material gebildet.

Die Konjunktion "und/oder" ist hier und im Folgenden insbesondere derart zu verstehen, dass die mittels dieser Konjunktion verknüpften Merkmale sowohl gemeinsam als auch als Alternativen zueinander ausgebildet sein können.

Nachfolgend wird ein Ausführungsbeispiel der Erfindung anhang einer Zeichnung näher erläutert. Darin zeigen:
- Figur 1: in einer schematischen Darstellung eine Schaltvorrichtung für ein Motorrad mit einem Schaltsignalgeber,
- Figur 2: den Schaltsignalgeber in einem Längsschnitt, und

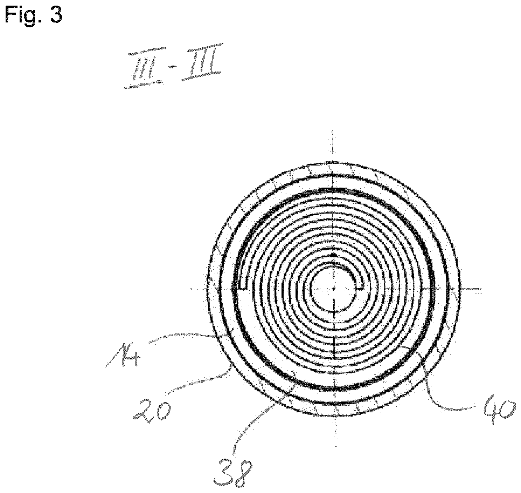

- Figur 3: den Schaltsignalgeber in einem Querschnitt III - III gemäß Figur 2.

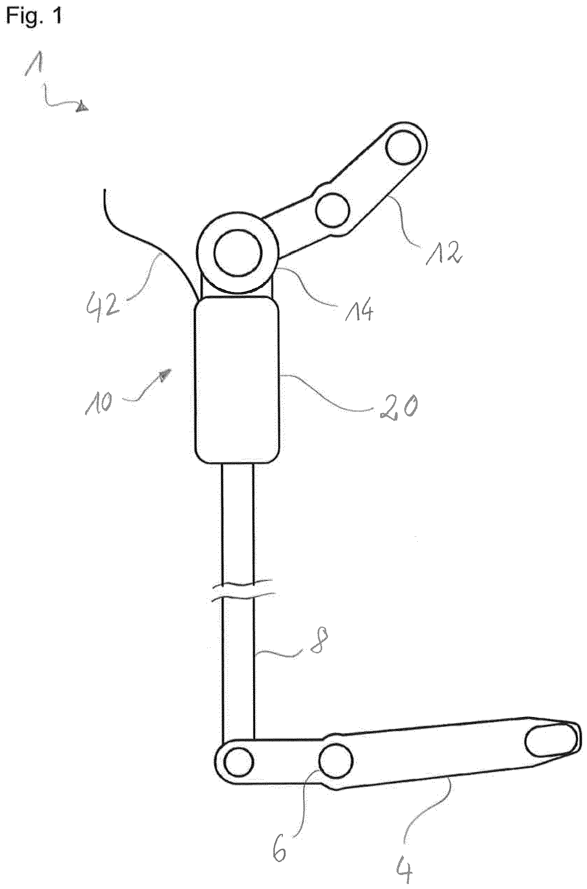

In Figur 1 ist eine Schaltvorrichtung 1 für ein Schaltgetriebe eines Motorrads näher dargestellt. Die Schaltvorrichtung 1 umfasst einen Fußhebel 4, der über einen Schwenkpunkt 6 beweglich an einem Motorradrahmen befestigt werden kann. Die Schaltvorrichtung 1 umfasst des Weiteren eine Schub- und Zugstange 8, die gelenkig mit dem Fußhebel 4 verbunden ist. Die Schaltvorrichtung 1 umfasst ferner einen Schaltsignalgeber 10, der zur Ausgabe eines Schaltsignals an eine Motorsteuerung des Motorrads dient. Dieser Schaltsignalgeber 10 ist mit der Schub- und Zugstange 8 gekoppelt. Des Weiteren umfasst die Schaltvorrichtung 1 einen (Getriebe-)Schalthebel 12, der kraftabtriebsseitig zu der Schaltstange 8 angeordnet und mit dieser über ein Verbindungsstück 14 gelenkig verbunden ist. Der Schalthebel 12 dient dabei zur Kraftübertragung auf eine Getriebestellwelle des Schaltgetriebes.

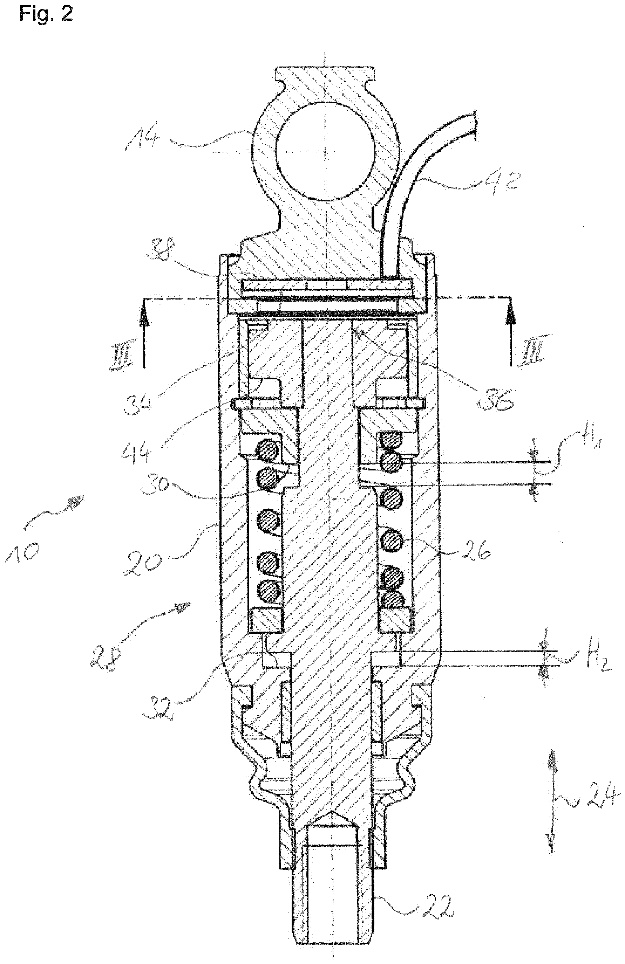

In Figur 2 ist der Schaltsignalgeber 10 näher dargestellt. Der Schaltsignalgeber 10 umfasst dabei ein Gehäuse 20, in dem in Verlängerung zu der Schub- und Zugstange 8 eine mit dieser kraftübertragungstechnisch koppelbare Schaltstange 22 (in Figur 1 im gekoppelten Zustand dargestellt) in Axialrichtung 24 verschiebbar gelagert ist. Die Schub- und Zugstange 8 bildet somit eine Verlängerungsstange zur Kraftübertragung zwischen der Schaltstange 22 und dem Fußhebel 4. Die Schaltstange 22 ist außerdem mittels einer Feder, konkret einer Schraubenfeder 26 derart verspannt gelagert, dass die Schaltstange 22 ohne äußere Krafteinwirkung in einer in Figur 2 dargestellten Neutralstellung 28 positioniert ist. Ausgehend von dieser Neutralstellung 28 ist die Schaltstange 22 um einen ersten Schalthub H₁ in das Gehäuse 20 hinein verschiebbar. Die Axialbewegung in das Gehäuse 20 hinein wird dabei durch einen ersten Axialanschlag 30 begrenzt. In Richtung auf den Fußhebel 4 ist die Schaltstange 22 begrenzt durch einen zweiten Axialanschlag 32 aus der Neutralstellung 28 um einen zweiten Schalthub H₂ verschiebbar. Bei einer über den jeweiligen Schalthub H₁ bzw. H₂ hinausgehenden Bewegung fungieren die beiden mit den Axialanschlägen 30 bzw. 32 als Mitnehmer und übertragen somit über das Gehäuse 20 die auf die Schaltstange 22 ausgeübte Schaltkraft auf das Verbindungsstück 14 und somit auf den Schalthebel 12.

Um eine Drehzahlangleichung zum vereinfachten Gangwechsel zu ermöglichen, umfasst der Schaltsignalgeber 10 einen Abstandssensor 34, der gegenüberliegend zu einem innenliegenden Axialende 36 der Schaltstange 22 ortsfest in dem Gehäuse 20 fixiert ist. Der Abstandssensor 34 umfasst dabei eine Leiterplatte 38, auf die eine ein induktives Messfeld erzeugende Leiterbahn, konkret eine vorzugsweise spiralförmige Spule 40 aufgedruckt ist. Diese Spule 40 dient zur induktiven Abstandmessung zwischen dem Abstandssensor 34 und dem innenliegenden Axialende 36. Der Abstandssensor 34 umfasst des Weiteren eine auf der Leiterplatte 38 angeordnete Auswerteschaltung (nicht näher dargestellt), die bei einer Annäherung des Axialendes 36 um den ersten Schalthub H₁ ein erstes Schaltsignal über eine Sensorleitung 42 an die Motorsteuerung des Motorrads (vorzugsweise in Form eines Spannungswerts) ausgibt und die bei einer Entfernung des Axialendes 36 um den zweiten Schalthub H₂ entsprechend ein zweites Schaltsignal über die Sensorleitung 42 ausgibt.

Zur vereinfachten Lagerung (und insbesondere zur Längs-Führung in dem Gehäuse 20) und gegebenenfalls zur Vergrößerung der zu sensierenden Fläche des Axialendes 36 der Schaltstange 22, trägt die Schaltstange 22 an ihrem Axialende 36 eine als Schuh 44 bezeichnete Hülse.

Die Verwendung des induktiven Abstandssensors 34 hat dabei den Vorteil, dass trotz eines möglichst einfachen Aufbaus der Sensorik auch bei Verwendung nur eines Sensors jeweils ein Schaltsignal bei entsprechender Annäherung oder Entfernung des Axialendes 36 ausgegeben werden kann. Des Weiteren erfordert ein induktives Sensorprinzip keinen Einsatz von vergleichsweise teuren Magneten zur Detektion der Abstandsänderung.

Der Gegenstand der Erfindung ist nicht auf das vorstehend beschriebene Ausführungsbeispiel beschränkt. Vielmehr können weitere Ausführungsformen der Erfindung von dem Fachmann aus der vorstehenden Beschreibung abgeleitet werden.

### Bezugszeichenliste

- 1: Schaltvorrichtung
- 4: Fußhebel
- 6: Schwenkpunkt
- 8: Schub- und Zugstange
- 10: Schaltsignalgeber
- 12: Schalthebel
- 14: Verbindungsstück
- 20: Gehäuse
- 22: Schaltstange
- 24: Axialrichtung
- 26: Schraubenfeder
- 28: Neutralstellung
- 30: Axialanschlag
- 32: Axialanschlag
- 34: Abstandssensor
- 36: Axialende
- 38: Leiterplatte
- 40: Spule
- 42: Sensorleitung
- 44: Schuh

- H₁: Schalthub
- H₂: Schalthub

## Patentansprüche

1. Schaltsignalgeber (10) für ein Schaltgetriebe eines Fahrzeugs, insbesondere eines Motorrads,
- mit einer Schaltstange (22) zur kraftübertragungstechnischen Kopplung mit einem Fußhebel (4),
- mit einem Gehäuse (20), in dem die Schaltstange (22) entlang ihrer Längsachse zwischen zwei Axialanschlägen (30,32) axial verschiebbar geführt ist,
- mit einem zur Kopplung mit einem Schalthebel (12) dienenden Verbindungsstück (14), das gegenüberliegend zu einem innenliegenden Axialende (36) der Schaltstange (22) mit dem Gehäuse (20) starr verbunden ist, und
- mit einem Abstandsensor (34) zur berührungslosen Abstandmessung, wobei der Abstandssensor (34) innerhalb des Gehäuses (20) in Gegenüberstellung zu dem innenliegenden Axialende (36) der Schaltstange (22) angeordnet und mit einer Sensorfläche radial zur Längsachse ausgerichtet ist, **dadurch gekennzeichnet dass** der Abstandssensor (34) eine Leiterplatte (38) umfasst, die innerhalb des Gehäuses (20) dem innenliegenden Axialende (36) der Schaltstange (22) gegenüberliegend und mit ihrer Flächenerstreckung radial zur Längsachse der Schaltstange (22) ausgerichtet ist, und wobei die Leiterplatte (38) eine elektrisch leitfähige Leiterbahn (40) zur induktiven Abstandsmessung gegen das innenliegende Axialende (36) der Schaltstange (22) sowie eine Auswerteschaltung trägt.

2. Schaltsignalgeber (10) nach Anspruch 1,
wobei die elektrisch leitfähige Leiterbahn der Leiterplatte (38) als spiralförmige Spule (40) ausgebildet ist.

3. Schaltsignalgeber (10) nach Anspruch 1 oder 2,
wobei die Auswerteschaltung dazu eingerichtet ist, ein erstes Schaltsignal auszugeben, wenn sich das innenliegende Axialende (36) der Schaltstange (22) näher als einen erster Schaltwert an die Leiterbahn (40) annähert, und ein zweites Schaltsignal auszugeben, wenn sich das Axialende (36) weiter als einen zweiten Schaltwert von der Leiterbahn (40) entfernt.

4. Schaltsignalgeber (10) nach Anspruch 3,
wobei der erste und der zweite Schaltwert derart gewählt sind, dass sie um einen schaltsignalfreien Abstand auseinanderliegen.

5. Schaltsignalgeber (10) nach einem der Ansprüche 1 bis 4,
wobei die Leiterplatte (38) unbeweglich im Innenraum des Gehäuses (20) an diesem befestigt ist.

6. Schaltsignalgeber (10) nach einem der Ansprüche 1 bis 5,
mit einer Feder (26), mittels derer die Schaltstange (22) zwischen den zwei Axialanschlägen (30,32) in unbelastetem Zustand in einer Neutralstellung (28) verspannt ist.

7. Schaltsignalgeber (10) nach einem der Ansprüche 1 bis 6,
wobei die Schaltstange (22) aus der Neutralstellung (28) um einen ersten Schalthub (H₁) in Richtung auf den Abstandssensor (34) und um einen zweiten Schalthub (H₂) von dem Abstandssensor (34) weg verschiebbar ist.

8. Schaltsignalgeber (10) nach einem der Ansprüche 1 bis 7,
wobei die zwei Axialanschläge (30,32) bei einer Bewegung der Schaltstange (22) als Mitnehmer zur Übertragung einer Schaltkraft in jede Axialrichtung (24) dienen.

9. Schaltsignalgeber (10) nach einem der Ansprüche 1 bis 8,
wobei die Schaltstange (22) und/oder eine optional zu deren Lagerung auf deren innenliegendes Axialende (36) aufgesetzte Hülse (44) aus einem unmagnetischen Material gebildet sind.

10. Schaltvorrichtung (1) für ein Schaltgetriebe eines Fahrzeugs, mit einem Schaltsignalgeber (10) gemäß einem der Ansprüche 1 bis 9.

## Claims

1. Shift signal transmitter (10) for a manual transmission of a vehicle, in particular a motorcycle,
- with a shift rod (22) for a force transmission connection to a foot lever (4),
- with a housing (20) in which the shift rod (22) is axially movably guided along its longitudinal axis between two axial stops (30,32),
- with a connecting piece (14) that is used for coupling to a shift lever (12) and that is rigidly connected to the housing (20) opposite to an internal axial end (36) of the shift rod (22), and
- with a distance sensor (34) for contactless distance measurement, wherein the distance sensor (34) is arranged within the housing (20) opposite to the inner axial end (36) of the shift rod (22) and is oriented with a sensor surface radial to the longitudinal axis, **characterized in that** the distance sensor (34) comprises a circuit board (38) which is oriented within the housing (20) opposite to the inner axial end (36) of the shift rod (22) and with its surface extension radial to the longitudinal axis of the shift rod (22), and wherein the circuit board (38) carries an electrically conductive conductor track (40) for inductive distance measurement relative to the internal axial end (36) of the shift rod (22) and an evaluation circuit.

2. Shift signal transmitter (10) according to Claim 1,
wherein the electrically conductive conductor track of the circuit board (38) is formed as a spiral coil (40).

3. Shift signal transmitter (10) according to Claim 1 or 2,
wherein the evaluation circuit is set up to output a first shift signal when the inside axial end (36) of the shift rod (22) is closer than a first switching value to the conductor track (40), and to output a second shift signal if the axial end (36) is further away from the conductor track (40) than a second switching value.

4. Shift signal transmitter (10) according to Claim 3,
wherein the first and the second switching values are selected in such a way that they are spaced apart by a shift signal-free distance.

5. Shift signal transmitter (10) according to any one of Claims 1 to 4,
wherein the circuit board (38) is fixedly attached to the housing (20) in the interior thereof.

6. Shift signal transmitter (10) according to any one of Claims 1 to 5,
with a spring (26), by means of which the shift rod (22) is biased into a neutral position (28) between the two axial stops (30,32) in the unloaded state.

7. Shift signal transmitter (10) according to any one of Claims 1 to 6,
wherein the shift rod (22) can be displaced towards the distance sensor (34) from the neutral position (28) by a first shift stroke (H₁) and can be displaced away from the distance sensor (34) by a second shift stroke (H₂).

8. Shift signal transmitter (10) according to any one of Claims 1 to 7,
wherein in the event of movement of the shift rod (22) the two axial stops (30,32) act as a driver for transmitting a shift force in each axial direction (24) .

9. Shift signal transmitter (10) according to any one of Claims 1 to 8,
wherein the shift rod (22) and/or an optional sleeve (44) mounted on the internal axial end (36) for the support thereof are made of a non-magnetic material.

10. Shift apparatus (1) for a manual transmission of a vehicle, with a shift signal transmitter (10) according to any one of Claims 1 to 9.

## Revendications

1. Transmetteur de signal de changement de rapport (10) pour une boîte de vitesses d'un véhicule, notamment d'une motocyclette,
- comprenant une tringle de changement de rapport (22) destinée à être accouplée par technique de transmission de force avec une pédale (4),
- comprenant un boîtier (20) dans lequel la tringle de changement de rapport (22) est guidée en coulissement axial le long de son axe longitudinal entre deux butées axiales (30, 32),
- comprenant une pièce de liaison (14) servant à l'accouplement avec un levier de changement de rapport (12), laquelle est reliée de manière rigide au boîtier (20) à l'opposé d'une extrémité axiale (36) intérieure de la tringle de changement de rapport (22), et
- comprenant un détecteur de distance (34) servant à la mesure de distance sans contact, le détecteur de distance (34) étant disposé à l'intérieur du boîtier (20) en vis-à-vis de l'extrémité axiale (36) intérieure de la tringle de changement de rapport (22) et orienté avec une surface de détection dans le sens radial par rapport à l'axe longitudinal,
**caractérisé en ce que**
le détecteur de distance (34) comporte un circuit imprimé (38) qui, à l'intérieur du boîtier (20), se trouve à l'opposé de l'extrémité axiale (36) intérieure de la tringle de changement de rapport (22) et est orienté avec la projection de sa surface dans le sens radial par rapport à l'axe longitudinal de la tringle de changement de rapport (22), et le circuit imprimé (38) portant une piste conductrice (40) électriquement conductrice destinée à la mesure de distance inductive contre l'extrémité axiale (36) intérieure de la tringle de changement de rapport (22) ainsi qu'un circuit d'interprétation.

2. Transmetteur de signal de changement de rapport (10) selon la revendication 1, la piste conductrice électriquement conductrice du circuit imprimé (38) étant réalisée sous la forme d'une bobine (40) en forme de spirale.

3. Transmetteur de signal de changement de rapport (10) selon la revendication 1 ou 2, le circuit d'interprétation étant conçu pour délivrer un premier signal de changement de rapport lorsque l'extrémité axiale (36) intérieure de la tringle de changement de rapport (22) se rapproche plus près de la piste conductrice (40) qu'une première valeur de changement de rapport, et pour délivrer un deuxième signal de changement de rapport lorsque l'extrémité axiale (36) s'éloigne de la piste conductrice (40) davantage qu'une deuxième valeur de changement de rapport.

4. Transmetteur de signal de changement de rapport (10) selon la revendication 3, les première et deuxième valeurs de changement de rapport étant sélectionnées de telle sorte qu'elles sont séparées d'une distance exempte de signal de changement de rapport.

5. Transmetteur de signal de changement de rapport (10) selon l'une des revendications 1 à 4, le circuit imprimé (38) étant fixé immobile au boîtier (20) dans l'espace intérieur de celui-ci.

6. Transmetteur de signal de changement de rapport (10) selon l'une des revendications 1 à 5, comprenant un ressort (26) au moyen duquel la tringle de changement de rapport (22) est contrainte dans une position neutre (28) entre les deux butées axiales (30, 32) à l'état non sollicité.

7. Transmetteur de signal de changement de rapport (10) selon l'une des revendications 1 à 6, la tringle de changement de rapport (22) pouvant être coulissée hors de la position neutre (28) d'une première course de changement de rapport (H₁) en direction du détecteur de distance (34) et d'une deuxième course de changement de rapport (H₂) à l'écart du détecteur de distance (34).

8. Transmetteur de signal de changement de rapport (10) selon l'une des revendications 1 à 7, les deux butées axiales (30, 32), lors d'un mouvement de la tringle de changement de rapport (22), servant de taquets d'entraînement destinés à la transmission d'une force de changement de rapport dans chaque direction axiale (24).

9. Transmetteur de signal de changement de rapport (10) selon l'une des revendications 1 à 8, la tringle de changement de rapport (22) et/ou une douille (44) servant optionnellement à supporter celle-ci montée sur son extrémité axiale (36) intérieure étant constituées d'un matériau amagnétique.

10. Dispositif de changement de rapport (1) pour une boîte de vitesses d'un véhicule, comprenant un transmetteur de signal de changement de rapport (10) selon l'une des revendications 1 à 9.
